# EUROPEAN PATENT SPECIFICATION

(11) **EP 3 435 462 B1**
(45) Date of publication and mention of the grant of the patent: **28.04.2021**
(21) Application number: 16895597.9
(22) Date of filing: 13.09.2016
(51) Int. Cl.: H01M 8/04082, H01M 8/04225, H01M 8/0612, H01M 8/0662, H01M 8/04089, H01M 8/04302, H01M 8/0438, H01M 8/0444, H01M 8/04746

(54) **FUEL CELL SYSTEM AND METHOD FOR DRIVING SAME**
BRENNSTOFFZELLENSYSTEM UND ANTRIEBSVERFAHREN DAFÜR
SYSTÈME DE PILE À COMBUSTIBLE ET PROCÉDÉ PERMETTANT DE LE PILOTER

(30) Priority: 24.03.2016 KR 20160035515
(43) Date of publication of application: 30.01.2019
(73) Proprietor: S-Fuelcell Co.,Ltd., Seongnam-si, Gyeonggi-do 13230 (KR)
(72) Inventor: LEE, Sang Hyun, Seongnam-si Gyeonggi-do 13520 (KR); KWON, Jun Taek, Seoul 08730 (KR); KIM, Min Seok, Seoul 02258 (KR); JUN, Hee Kwon, Seoul 01619 (KR)
(74) Representative: Isarpatent
(86) International application number: PCT/KR2016/010378
(87) International publication number: WO 2017/164471

(56) References cited:
- JP-A- H11 265 724
- JP-A- 2005 154 220
- KR-A- 20130 034 269
- KR-A- 20130 034 269
- KR-B1- 100 472 332
- KR-B1- 100 505 472
- KR-B1- 100 511 573
- US-A1- 2001 031 386
- US-A1- 2003 068 539
- US-B1- 6 408 966

## Description

### [Technical field]

The present invention relates to a fuel cell system and a method of driving the same.

### [Background]

Generally, a fuel cell device producing electrical energy using fuel cells is a generator which converts chemical energy of fuel into electrical energy using electrochemical reaction, and includes a fuel cell stack (stack) provided with a plurality of fuel cells, a fuel converter, a balance of plant (BPP), a control apparatus, etc.

That is, the fuel cell provided in the fuel cell device is an electrochemical generator which continuously produces electricity by supplying hydrogen as fuel gas and oxygen in air respectively to an anode and a cathode as an inverse reaction of water electrolysis during which hydrogen and oxygen are generated.

Through such operation of the fuel cell, electricity and heat are generated in the fuel cell. The fuel cell is basically a cell in which an anode, an electrolyte layer, and a cathode are sequentially bonded to each other, and the fuel cell stack is formed by stacking a plurality of cells. Thereby, desired voltage and current can be obtained.

Generally, following reaction occurs in the fuel cell. If hydrogen gas as fuel for generating electricity is supplied to the anode, the hydrogen is oxidized into a hydrogen ion (H+) and an electron (e-) in a catalytic layer in the anode. In the cathode, the supplied oxygen, the hydrogen ion moving through the electrolyte, and the electrode moving through an outside wire are reacted to generate water (oxygen reduction reaction). At this process, outside flow of the electron makes electric current, thereby generating electricity.

Based on these principles, a fuel cell system provided with the fuel cell device includes a fuel reforming device, the fuel cell device, a power conversion device, and a heat recovery system.

The fuel reforming device reforms hydrocarbon fuel containing hydrogen into hydrogen enriched gas (e.g., gas with 75% or more hydrogen concentration) such that desired amount of electricity can be stably produced in the fuel cell stack. The fuel cell device produces DC electricity, water and heat through reaction with hydrogen and oxygen.

The power conversion device converts DC electricity into AC electricity, and the heat recovery system recovers waste heat from a main body and warms up the fuel reforming device or supply heat to a cogeneration system.

Currently, since failure of constituent elements (e.g., BOP and other components) included in the fuel cell system can be hardly determined, deterioration of durability of the fuel cell system and increase of maintenance cost can be expected.

In addition, in order to suitably reform hydrocarbon fuel, that is to make gas (i.e., the reformed gas) containing hydrogen of desired concentration the fuel reforming device of a conventional fuel cell system requires warm-up time.

Therefore, the fuel cell system cannot produce desired electrical energy immediately after the fuel cell system is operated.

### [Prior Art Document]

### [Patent Document]

Korean Patent Application No. 10-2009-0133277 (Application Date: 2009. 12. 29)
US 2003/068539 A1 relates to a power-heat installation for producing electrical and thermal energy.
US 6 408 966 B1 relates to a fuel cell vehicle.
US 2001/031386 A1 relates to a fuel cell power generation system.
KR 2013 0034269 relates to a fuel cell system.

### [CONTENTS OF THE INVENTION]

### [Objects to be achieved]

The present invention has been made in an effort to provide a fuel cell system having advantages of generating electrical energy without warm-up time.

### [Means for achieving the object]

A method of driving a fuel cell system according to claim 1.

Inflow amount of the fuel may be determined according to a compression pressure of the reformed gas with complete composition stored in the storing container and a capacity of the storing container.

The method includes determining an internal pressure of the storing container using a signal transmitted from a pressure sensor, comparing the determined internal pressure with a predetermined pressure, closing the third valve when the determined internal pressure reaches the predetermined pressure, and reducing amount of the fuel flowing into the reformer by controlling operation of a fuel booster.

The method includes opening a fourth valve such that the reformed gas with complete composition stored in the storing container flows into the fuel cell stack when an operation mode is an instantaneous operation mode.

The method may further include opening the second valve and the fourth valve such that the reformed gas supplied from the reformer and the reformed gas supplied from the storing container flows into the fuel cell stack when an operation mode is a high-speed operation mode.

A fuel cell system according another aspect of the present invention may include a reformer which reforms fuel into a gas in desired state and discharges the reformed gas, the fuel flowing into the reformer through a first inlet, a first valve positioned between an outlet of the reformer and a second inlet, a second valve connected to the outlet of the reformer, a fuel cell stack connected to the second valve and producing electricity using the reformed gas flowing in the fuel cell stack through the second valve, a third valve connected to the outlet of the reformer, a storing container connected to the third valve, a fourth valve positioned between the storing container and an inlet of the fuel cell stack, a fifth valve positioned between an outlet of the fuel cell stack and the second inlet of the reformer, and a control apparatus connected to the first to fifth valves and controlling opening or closing status of the first valve to fifth valves, wherein the control apparatus is configured to open the first valve to discharge a reformed gas with incomplete composition toward the reformer when a reforming reaction starts in the reformer, to open the second valve and the fifth valve such that a reformed gas with complete composition flows into the fuel cell stack to operate the fuel cell stack when the reformed gas with complete composition is generated in the reformer, to open the third valve to store the reformed gas with complete composition in the storing container, and to open the fourth valve such that the reformed gas with complete composition stored in the storing container flows into the fuel cell stack when a mode selection signal corresponds to an instantaneous operation mode.

The fuel cell system may further include a temperature detector connected to the control apparatus and detecting an inside temperature of the reformer, wherein the control apparatus determines the inside temperature of the reformer using a detection signal output from the temperature detector, opens the first valve when the determined inside temperature reaches a first predetermined temperature, and closes the first valve and opens the second valve when the determined inside temperature is higher than or equal to a second predetermined temperature.

The fuel cell system may further include a pressure sensor connected to the control apparatus and detecting an internal pressure of the storing container, wherein the control apparatus determines the internal pressure of the storing container using a signal transmitted from the pressure sensor and opens the third valve when the determined internal pressure is lower than a predetermined pressure.

The fuel cell system may further include a first flowmeter connected to the control apparatus and detecting amount of the fuel flowing into the reformer, and a fuel booster connected to the control apparatus and adjusting a pressure of the fuel flowing into the reformer after passing through the first flowmeter, wherein the control apparatus controls the fuel booster to increase the amount of the fuel flowing into the reformer when the internal pressure is lower than the predetermined pressure and the amount of the fuel determined by the first flowmeter does not reach a predetermined amount, and wherein the predetermined amount is determined according to a compression pressure of the reformed gas with complete composition stored in the storing container and a capacity of the storing container.

The control apparatus may open the second valve and the fourth valve such that the reformed gas supplied from the reformer and the reformed gas supplied from the storing container flow into the fuel cell stack when the mode selection signal corresponds to a high-speed operation mode.

### [Effect of the Invention]

According to aspects of the present invention, since a fuel cell system generates electricity using reformed gas stored in a storing container, a warm-up time is not necessary to make a reformed gas with desired composition and convenience of users may be improved.

### [BRIEF DESCRIPTION OF THE DRAWINGS]

FIG. 1 is a schematic view of a fuel cell system according to an exemplary embodiment of the present invention.
FIG. 2 is a flowchart of a method of driving a fuel cell system according to an exemplary embodiment of the present invention when an operation mode of the fuel cell system is a normal operation mode.
FIG. 3 is a flowchart of storing reformed gas in FIG. 2.
FIG. 4 is a method of driving a fuel cell system according to an exemplary embodiment of the present invention when an operation mode of the fuel cell system is an instantaneous operation mode.
FIG. 5 is a schematic view of supplying a reformed gas according to warm-up time of a reformer in an exemplary embodiment of the present invention.
FIG. 6 illustrates an example of a storing container of a reformed gas according to an exemplary embodiment of the present invention, wherein the storing container is divided into a plurality of chambers.

### [Details for executing the invention]

The invention is explained in more detail below using specific exemplary embodiments, which are specified in the accompanying drawings. The specific exemplary embodiments will be described in detail to enable a person of an ordinary skill in the art to implement the present invention. It should be understood that various exemplary embodiments of the present invention differ from each other but are not mutually exclusive. For example, specific shape, structure, and characteristics of an exemplary embodiment described herein can be varied for another exemplary embodiment without departing from spirit and scope of the present invention. In addition, position and arrangement of constituent elements for an exemplary embodiment can be varied without departing from spirit and scope of the present invention. It should be appreciated that the exemplary embodiment or exemplary embodiments are only examples, and are not intended to limit the scope, applicability, or configuration in any way. The scope of the present invention, if described suitably, will be limited only by the claims as well as alternate and/or equivalent implementations. Unless indicated otherwise, like reference numbers or signs to the figures indicate like elements.

A fuel cell system and a method of driving the same according to exemplary embodiments of the present invention will be described in detail with reference to the accompanying drawings.

A fuel cell system according to an exemplary embodiment of the present invention is configured to be operated and generate electricity without warm-up time required to make reformed gas with desired composition.

The fuel cell system according to the exemplary embodiment of the present invention is configured to be operated and generate electricity immediately without warm-up time and make-ready time by replacement between reformed gas produced by reforming fuel after operation of the fuel cell system and pre-stored reformed gas and by storing a portion of the produced reformed gas.

Since the fuel cell system operated by reformed gas should be warmed up to a reaction activation temperature of a catalyst in order to reform fuel (LNG, LPG, diesel, or gasoline), the fuel cell system does not generate electricity for warm-up time (e.g., 1 hour to 3 hour).

Since the fuel cell system according to the exemplary embodiment of the present invention stores reformed gas remaining after being used by a fuel cell stack or additional reformed gas in an additional storing container of the fuel cell system, however, the fuel cell system can generate electricity immediately using the stored reformed gas during warm-up time in later operation.

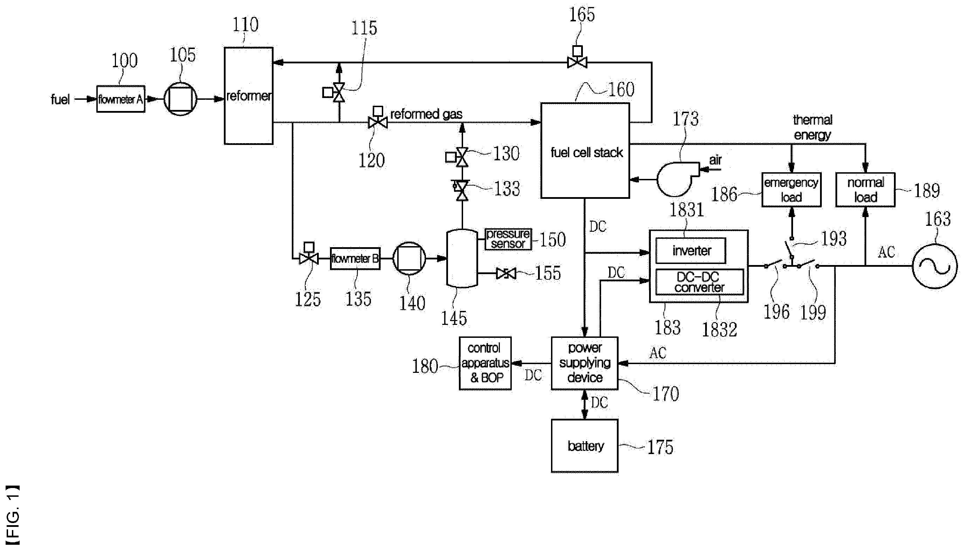

Referring to FIG. 1, a fuel cell system according to an exemplary embodiment includes a flowmeter A (e.g., first flowmeter 100), a fuel booster 105 connected to the flowmeter A (100), a reformer 110 with a first inlet connected to the fuel booster 105, a fuel cell stack 160 connected to an outlet of the reformer 110, a valve A (e.g., first valve 115) positioned between a second inlet of the reformer 110 and the outlet, a valve B (e.g., second valve 120) positioned between the outlet of the reformer 110 and the fuel cell stack 160 and connecting the reformer 110 with the fuel cell stack 160, a valve C (e.g., third valve 125) with a side connected to the outlet of the reformer 110, a flowmeter B (e.g., second flowmeter 135) connected to the other side of the valve C (125) and connected to the outlet of the reformer 110 through the valve C (125), a compressor 140 connected to an output side of the flowmeter B (135), a storing container 145 connected to an output side of the compressor 140, a pressure sensor 150 mounted at the storing container 145, a pressure regulator 133 mounted at the storing container 145, a valve D (e.g., fourth valve 130) positioned to be connected to the pressure regulator 133 and a side of the valve B (120) [i.e., an inlet of the fuel cell stack 160], a valve E (e.g., fifth valve) positioned between an outlet of the fuel cell stack 160 and the second inlet of the reformer 110, a relief valve 155 positioned at an output side of the storing container 145, and an air blower 173 for supplying air to the fuel cell stack 160.

In addition, the fuel cell system according to the exemplary embodiment includes a power supplying device 170 connected to the fuel cell stack 160, a battery 175 connected to the power supplying device 170, control apparatus/BOP 180 connected to the power supplying device 170, a power conversion device 183 connected to the fuel cell stack 160 and the power supplying device 170, an emergency load 186 and a normal load 189 respectively connected to the fuel cell stack 160, a switch A (e.g., first switch 193) connected to the emergency load 186, a switch B (e.g., second switch 196) connected to an inverter 183 and the switch A (186), a switch C (199) connected to the switch A (193) and the switch B (196), a commercial power 163 connected to the normal load 189, the switch C (199) and the power supplying device 170.

The flowmeter A (100) detects amount of fuel flowing into the inlet and outputs a signal corresponding to the detected amount of the fuel.

The flowmeter A (100) is connected to the control apparatus 180 and outputs the signal corresponding to the detected amount of the fuel to the control apparatus 180 such that the control apparatus 180 determines the inflow amount of the fuel.

At this time, the fuel flowing into the flowmeter A (100) will flow into the reformer 110 through the flowmeter A (100) and the fuel booster 105, and may be fossil fuel such as LNG, LPG, gasoline, diesel, etc.

The fuel booster 105 is positioned between the flowmeter A (100) and the reformer 110 and is configured to control the inflow amount of the fuel into the reformer 110 by controlling pressure of the fuel flowing therein from the flowmeter A (100) to be desired pressure.

The fuel booster 105 is connected to the control apparatus 180 and is controlled by a control signal transmitted from the control apparatus 180. At this time, the control apparatus 180 controls operation of the fuel booster 105 using the amount of the fuel detected by the flowmeter A (100).

The reformer 110 is a fuel reforming device and is configured to convert composition of the fuel flowing therein through the fuel booster 105.

For example, the reformer 110 reforms hydrocarbon fuel [liquefied petroleum gas (LPG), liquid natural gas (LNG), methane, coal gas or methanol, etc.] into hydrogen enriched gas (e.g., gas with 75% or more hydrogen concentration) and produces reformed gas of the hydrogen enriched gas (hereinafter, this reformed gas will be called 'reformed gas with complete composition').

The reformer 110 performs core process of producing hydrogen in which the reformed gas containing hydrogen enriched gas is produced based on reaction with hydrocarbon and water.

The valve A (115), the valve B (120), the valve C (125), the valve D (130) and the valve E (165) are connected to the control apparatus 180 and are electric valves which are controlled by control signal transmitted from the control apparatus 180. The valve A (115), the valve B (120), the valve C (125), the valve D (130) and the valve E (165) are used to deliver the reformed gas from the reformer 110 to the constituent elements.

For these purposes, the valve A (115), as described above, is positioned between the outlet of the reformer 110 and the second inlet and is configured to flow reformed gas which is reformed incompletely (i.e., with hydrogen concentration smaller than a predetermined amount) and cannot operate the fuel cell normally (hereinafter, this reformed gas is called 'reformed gas with incomplete composition') back into the reformer 110.

The valve B (120) is configured to deliver the reformed gas with complete composition which is discharged from the outlet of the reformer 110 to the fuel cell stack 160.

The valve C (125) is configured to flow the reformed gas which is discharged from the outlet of the reformer 110 into the storing container 145 after passing through the flowmeter B 135 and the compressor 140.

Therefore, in this exemplary embodiment, the valve C (125) is positioned between the reformer 110 and the flowmeter B (135).

The valve D (130) is configured to deliver the reformed gas stored in the storing container 145 to the fuel cell stack 160 and, as described above, is positioned between the pressure regulator 133 and the fuel cell stack 160.

The valve E (165) is configured to flows the reformed gas discharged from the fuel cell stack 160 back into the reformer 110 in order to adjust pressre in the fuel cell stack 160 and reuse the reformed gas remaining after being used in the fuel cell stack 160.

The valve E (165) is provided between the fuel cell stack 160 and the second inlet of the reformer 110.

Not illustrated in FIG. 1, the fuel cell system according to the exemplary embodiment further includes a temperature detector which is connected to the control apparatus 180, detects temperature in the reformer 110, and outputs a detection signal to the control apparatus 180 in order to determine operation state of the reformer 110 and determine whether an internal state of the reformer 110 is a normal operation state where the desired reformed gas is produced.

Therefore, the control apparatus 180 determines the temperature in the reformer 110 using the signal transmitted from the temperature detector and controls the valve A to the valve C (115, 120, and 125) and the valve E (165) according to whether the determined temperature reaches a predetermined temperature.

In alternative examples, on the contrary, the control apparatus 180 controls opening or closing of the valves 115, 120, 125, and 165 according to opening time of each valve 115, 120, 125, or 165 determined according to temperature around the reformer 110.

The flowmeter B (135) is configured to determine amount of the reformed gas delivered to the storing container 145 through the compressor 140, and is connected to the control apparatus 180 to output a signal corresponding to the determined amount of the reformed gas to the control apparatus 180.

The compressor 140 is configured to compress the reformed gas flowing into the storing container 145 through the flowmeter B (135) and controls the amount of the reformed gas flowing into the storing container 145.

The compressor 140 is connected to the control apparatus 180 and controls compression degree of the reformed gas by being operated according to the control signal transmitted from the control apparatus 180. At this time, the control apparatus 180 controls operation of the compressor 140 using the amount of the reformed gas detected by the flowmeter B (135) and the flowmeter A (100).

The storing container 145 stores the reformed gas compressed by the compressor 140 and flowing therein.

The pressure sensor 150 is configured to detect pressure in the storing container 145 and is connected to the control apparatus 180. Therefore, the pressure sensor 150 outputs a signal corresponding to the detected pressure to the control apparatus 180.

In addition, the relief valve 155 is configured to maintain the pressure in the storing container 145 to be predetermined pressure. The relief valve 155 is a valve which discharges the reformed gas stored in the storing container 145 to the exterior thereof as occasion demands.

The relief valve 155 is connected to the control apparatus 180 and is controlled according to the control signal transmitted from the control apparatus 180.

For these purposes, the control apparatus 180 compares the pressure in the storing container 145 determined by the signal transmitted from the pressure sensor 150 with the predetermined pressure, and opens the relief valve 155 if the determined pressure is higher than or equal to the predetermined pressure.

The pressure regulator 133 is configured to pressure of the reformed gas flowing from the storing container 145 into the fuel cell stack 160 to be predetermined pressure, and controls the pressure the reformed gas discharged from the storing container 145 to be predetermined pressure.

The fuel cell stack 160 is formed by stacking tens to hundreds of single cells in which electrochemical reaction occurs.

The single cell of the fuel cell stack 160 includes an anode, a cathode, a polymer electrolyte membrane, a membrane-electrode assembly (MEA), and a bipolar plate.

The fuel cell stack in which the single cells are stacked has fastening plates at both ends pressed by a fastener or air pressure in order to reduce contact resistance between constituent elements. The fastening plate at the both ends of the fuel cell stack include an outlet and an inlet of reaction gas, coolant circulating hole and a power output socket.

The air blower 173 is configured to supply oxygen for generating electricity of the fuel cell and is connected to the control apparatus 180 to be controlled by the control apparatus 180.

The power supplying device 170 is configured to supply power for operating each constituent elements of the fuel cell system. The power supplying device 170 supplies power to each constituent elements using power supplied from at least one of the commercial power 168 and the fuel cell stack 160.

The battery 175 is connected to the power supplying device 170 so as to perform charging operation using power supplied from the power supplying device 170 or operate the constituent elements when the commercial power 163 and the fuel cell stack 160 operate abnormally or in emergency such as blackout or power failure, etc.

The control apparatus and BOP (hereinafter, it will be called 'control apparatus') 180 is connected to the power supplying device 170 to receive power for operation from the power supplying device 170 and controls overall operations of the fuel cell system.

In the exemplary embodiment, the fuel cell system may further include auxiliary devices (BOP) including electric and control boards, pumps, blowers, power valves, and etc. other than the devices illustrated in FIG. 1.

The power conversion device 183 is connected to the fuel cell stack 160 and the power supplying device 170 and is configured to supply desired state of power (DC or AC) to respective constituent elements.

The power conversion device 183 in the exemplary embodiment includes an inverter 1831 converting input DC power into AC power and a DC-DC converter 1832 converting the input DC power into at least one DC power of desired magnitude. The power conversion device 183 is not limited to this, but includes one of the inverter 1831 and DC-DC converter 1832 as occasion demands.

The emergency load 186 is load operated in emergency such as blackout or power failure, etc. The emergency load 186 may receive power from the power conversion device 183 to be operated.

The emergency load 186 can receive power in a stand-alone mode.

In the exemplary embodiment, the emergency load 186 may include an uninterruptible power supply (UPS) and is configured to generate power using at least one of thermal energy and power supplied from the fuel cell stack 160 in emergency and to perform operation required in emergency such as backup of data of a battery fuel system.

The normal load 189 may be load which receives power from at least one of the fuel cell stack 160 and the commercial power 163 and is operated in normal state, not in emergency.

The switch A (193), the switch B (196), and the switch C (199) are connected to the control apparatus 180 and are switches which are controlled according to the control signal transmitted from the control apparatus 180. The switch A (193), the switch B (196), and the switch C (199) are configured to supply power to the emergency load 186 and the normal load 189 according to their switching states.

The switch A (193) is configured to connect the power conversion device 183 with the emergency load 186, and the switch B (196) is configured to connect the power conversion device 183 with the emergency load 186 and to connect the power conversion device 183 with the commercial power 163.

The switch C (199) is configured to connect the power conversion device 183 with the normal load 189 and to connect the power conversion device 183 with the commercial power 163.

Operation of the fuel cell system according to the exemplary embodiment will hereinafter be described.

In the exemplary embodiment, initial states of the valves 115, 120, 125, 130, and 165 are closed states, and initial states of the switches 193, 196, and 199 are open states.

After the reformer 110 reaches reforming reaction condition by raising the temperature of the fuel input through the flowmeter A (100) and the fuel booster 105 to the predetermined temperature where reforming catalytic reaction is activated, the reformer 110 reforms the inflow fuel to the reformed gas of desired state to generate the reformed gas with complete composition and supplies the reformed gas with complete composition to the fuel cell stack 160.

Therefore, a heater which is controlled by the control apparatus 180 is provided in the reformer 110.

If the reforming reaction starts in the reformer 110, the control apparatus 180 compares the temperature in the reformer 110 detected by the temperature detector with the predetermined temperature. If the temperature in the reformer 110 does not reach the predetermined temperature, the control apparatus 180 determines that the state of the reformer 110 is incomplete state where the reformed gas with complete composition cannot be generated and opens the valve A (115) to discharge the reformed gas with incomplete composition back into the reformer 110.

If the reformed gas with complete composition is generated, that is the temperature of the reformer 110 rises above the predetermined temperature and the reformed gas with complete composition having the desired hydrogen amount or more is generated, the control apparatus 180 closes the valve A (115) and opens the valve B (120) and the valve E (165) such that the reformed gas is supplied to the fuel cell stack 160 and fuel cell stack 180 generates electricity. Thereby, the electricity generated by the fuel cell stack 180 is supplied to the power supplying device 170 and the power conversion device 183.

When the fuel cell stack 160 is operated, the control apparatus 180 drives the air blower 173 to supply oxygen required to generate electricity by the fuel cell stack 160.

The fuel cell system according to the exemplary embodiment simultaneously performs a step of storing the reformed gas in the storing container 145.

For these purposes, the fuel cell system determines the amount of fuel flowing into the reformer 110 considering the amount of the reformed gas which will be stored in the storing container 145 such that sufficient amount of the reformed gas is generated which can be supplied to the fuel cell stack 160 and be additionally stored in the storing container 145.

Therefore, the control apparatus 180 controls the fuel booster 105 to increase the amount of the fuel flowing into the reformer 110 considering the amount of the reformed gas which will stored in the storing container 145. Thereby, the amount of the generated reformed gas increases. After that, the control apparatus 180 opens the valve C (125). At this time, the amount of fuel flowing into the reformer 110 is controlled by pressure of the fuel adjusted by the fuel booster 105 according to control of the control apparatus 180.

Therefore, the reformed gas discharged through the outlet of the gas reformer 110 flows into the compressor 140 through the opened valve C (125) and the flowmeter B (135). Thereby, the reformed gas of the predetermined pressure is stored in the storing container 145.

The amount of the reformed gas stored in the storing container 145 can be determined based on warm-up time which is preparation time for the reforming reaction, time required to operate the emergency load, time required to perform backup of data of the fuel cell system, etc.

If an operation mode of the fuel cell system becomes an instantaneous operation mode in a state that the reformed gas is stored in the storing container 145, the reformer 110 begins to operate to control its state to reform the inflow fuel. At this time, the valve B (120) is maintained to be closed.

If the operation mode of the fuel cell system becomes the instantaneous operation mode, however, the control apparatus 180 opens the valve D (130) such that the reformed gas stored in the storing container 145 is supplied to the fuel cell stack 160 after the pressure of the reformed gas is adjusted by the pressure regulator 133. Therefore, the normal mode can be performed.

At this time, when the valve D 130 is opened, the control apparatus 180 also opens the valve E (165) such that the reformed gas discharged from the fuel cell stack 160 flows back into the reformer 110 through the second inlet.

That is, if it is determined that a mode selection signal input to the control apparatus 180 corresponds to the instantaneous operation mode, it is determined that the operation mode of the fuel cell system is the instantaneous operation mode and the valve D (130) and the valve E (165) are controlled such that the reformed gas stored in the storing container 145 is immediately supplied to the fuel cell stack 160 and the fuel cell stack 160 is operated without operation of the reformer 110.

During performing the instantaneous operation mode, the control apparatus 180 controls the valves 115, 120, and 165 according to the operation of the reformer 110 such that the fuel flowing into the reformer 110 is reformed completely and the reformed gas with complete composition is generated after the warm-up time.

If the reformer 110 can generate the reformed gas with complete composition after the warm-up time, the control apparatus 180 opens the closed valve B (120) and closes the opened valve D (130) and the opened valve E (165).

Thereby, the reformed gas flowing into the fuel cell stack 160 is changed from the reformed gas stored in the storing container 145 to the reformed gas discharged from the reformer 110 and the fuel cell stack 160 is operated continuously.

If the instantaneous operation is demanded, the fuel cell stack 160 is operated using the reformed gas stored in the storing container 145 instead of using the reformed gas supplied from the reformer 110. Therefore, the fuel cell system can be operated during the warm-up time. If the reformer 110 can generate the reformed gas with complete composition, the reformed gas generated by the reformer 110 is supplied to the fuel cell stack 160.

Since the fuel cell stack 160 can generate electricity during the warm-up time where the reformer 110 is warmed up, the fuel cell system is operated immediately without delay.

In emergency when the power is not supplied from the commercial power 163 and the emergency load 186 is operated, the control apparatus 180 turns on the switch A (193) and the switch B (196) such that the fuel cell stack 160 is operated using the reformed gas stored in the storing container 145 to supply the power to the emergency load 186 or the power is supplied from the commercial power 163 to the emergency load 186. At this time, the control apparatus 180 turns on the switch A to the switch C (193, 196, and 199).

If the fuel cell stack 160 is not operated because the fuel is not supplied and the power is not supplied from the commercial power 163, the fuel cell stack 160 is operated using the reformed gas stored in the storing container 145 to supply the thermal energy and the power to the emergency load 186. In addition, the power charged in the battery 175 can be supplied to the emergency load 186. At this time, the switch A (193) and the switch B (196) are turned on by the control apparatus 180.

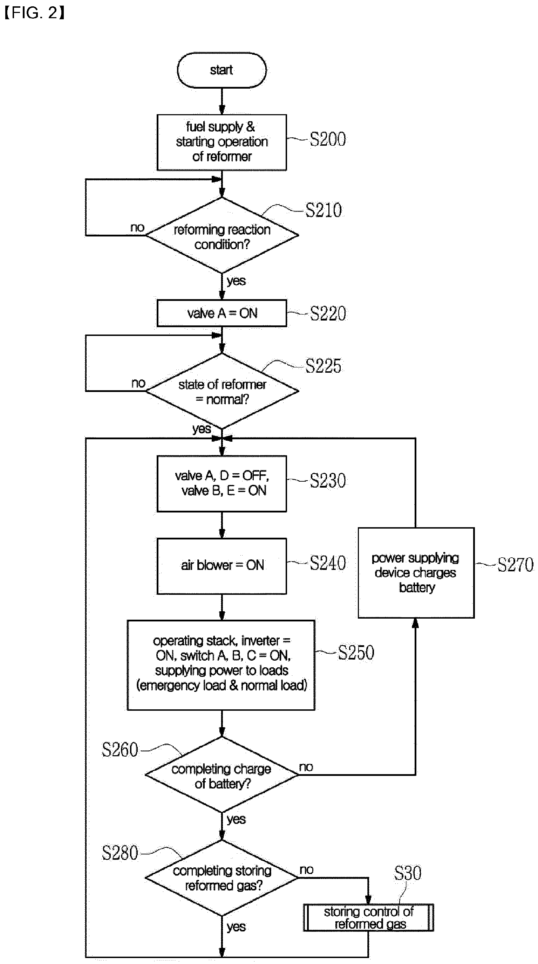

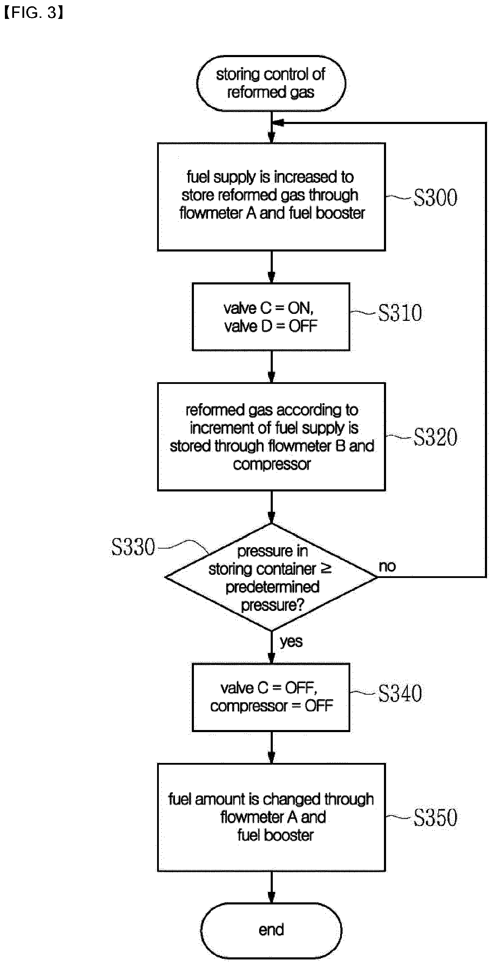

Referring to FIG. 2 and FIG. 3, a method of driving a fuel cell system will be described in detail.

In the exemplary embodiment, the fuel cell system is operated at one mode among the normal operation mode, the instantaneous operation mode, and the stand-alone mode.

At this time, the mode, as described above, can be determined by a mode selection switch outputting the mode selection signal by user's selection or the mode selection signal generated according to operation of the fuel cell system by the control apparatus 180 or an external monitoring device.

### [Normal operation mode]

Referring to FIG. 2, the operation of the fuel cell system at the normal operation mode will be described.

If the fuel cell system begins to operate by an operation switch (not shown) and the mode selection signal input to the control apparatus 180 corresponds to the normal operation mode, the control apparatus 180 controls the fuel cell system to be operated at the normal operation mode.

Therefore, the control apparatus 180 controls the fuel booster 105 to supply the fuel to the reformer 110 and the reformer 110 begins to operate due to supply of the fuel at step S200.

After that, the control apparatus 180 determines the inside temperature of the reformer 110 using the signal transmitted from the temperature detector and compares the determined inside temperature with a first predetermined temperature to determine whether the reformer 110 reaches the reforming reaction condition at step S210.

If the determined inside temperature reaches the first predetermined temperature, the control apparatus 180 determines that the reformer 110 reaches the reforming reaction condition and can generate the reformed gas, and opens the valve A (115) at step S220.

Since the valve A (115) is opened, the reformed gas with incomplete composition discharged from the outlet of the reformer 110 flows back into the reformer 110 through the valve A (115).

The control apparatus 180 determines the inside temperature of the reformer 110 using the signal transmitted from the temperature detector, and determines whether the determined inside temperature is higher than or equal to a second predetermined temperature to determine whether the reformer 110 can generate the reformed gas with complete composition at step S225. Here, the second predetermined temperature is higher than the first predetermined temperature.

If the determined inside temperature is higher than or equal to the second predetermined temperature, the control apparatus 180 closes the valve A (115), opens the valve B (120) and the valve E (165) at step S230, and drives the air blower 173 at step S240. In this case, the valve A (115) and the valve D (130) are closed and the valve B (120) and the valve E (165) are opened.

Therefore, the reformed gas with hydrogen which is discharged from the reformer 110 through the opened valve B (120) is supplied to the fuel cell stack 160 and the oxygen is supplied to the fuel cell stack 160 by operation of the air blower 173. Therefore, the fuel cell stack 160 generates electricity.

The air blower 173 can be operated with supply of the reformed gas into the fuel cell stack 160. The fuel cell stack 160 is operated based on the reformed gas to generate DC power. If the generated DC power is supplied to the power conversion device 183, the inverter 1831 of the power conversion device 183 converts the DC power into AC power. The AC power is supplied to the normal load 189 and the emergency load 186 through the switch A (193), the switch B (196), and the switch C (199), and the loads 189 and 186 are operated at step S250.

As described above, at the normal operation mode, the fuel cell stack 160 is operated and the switch A (193), the switch B (196), and the switch C (199) are turned on to supply the power to the normal load 189 and the emergency load 186.

In a state that the power is supplied to the loads 189 and 186, the control apparatus 180 determines whether charge of the battery 175 is completed at step S260.

For these purposes, the battery 175 determines its charging state and outputs a signal corresponding to the charging state to the control apparatus 180. Therefore, the control apparatus 180 determines whether the battery 175 is charged completely depending on the signal transmitted from the battery 175.

If it is determined that the battery 175 is not charged completely, the control apparatus 180 controls the power supplying device 170 to charge the battery 175 using the power generated by the fuel cell stack 160 at step S270.

At this time, charge of the battery 175 using the fuel cell stack 160 is performed when the power generated by the fuel cell stack 160 is larger than the power consumed by the load 186 and 189.

For these purposes, the power supplying device 170 calculates power consumption using the power supplied to the loads 186 and 189, and compares the calculated power consumption with the power supplied from the fuel cell stack 160 (hereinafter, the power supplied from the fuel cell stack is called a 'cell power') to determine whether the cell power is larger than the power consumption.

If the cell power is larger than the power consumption, the power supplying device 170 outputs a signal corresponding thereto to the control apparatus 180 such that the control apparatus 180 can recognize that the cell power is larger than the power consumption.

Therefore, the control apparatus 180 causes the battery 175 to be charged using the cell power if the cell power is larger than the power consumption and the battery 175 is not charged completely.

If the battery 175 is charged completely at the step S260, the control apparatus 180 determines using the signal transmitted from the pressure sensor 150 whether the reformed gas is stored in the storing container 145 completely at step S280.

That is, the control apparatus 180 determines the pressure in the storing container 145 using the signal transmitted from the pressure sensor 150, and determines that the required amount [that is, a volume of the storing container 145] of the reformed gas is stored in the storing container 145 is the determined pressure reaches the predetermined pressure.

If it is determined that the required amount of the reformed gas is stored in the storing container 145 at the step S280, the fuel cell system is operated only using the reformed gas supplied from the reformer 110. If it is determined that the required amount of the reformed gas is not stored in the storing container 145 at the step S280, however, the control apparatus 180 performs control of storing the reformed gas in the storing container 145 at step S30.

Referring to FIG. 3, the control of storing the reformed gas in the storing container 145 in the fuel cell system according to the exemplary embodiment of the present invention will be described in detail.

Referring to FIG. 3, the control apparatus 180 increases the amount of the fuel flowing into the reformer 110 using the flowmeter A (100) and the fuel booster 105 at step S300 such that the reformer 110 generates sufficient amount of the reformed gas which will be stored in the storing container 145.

To the end, the control apparatus 180 determined the amount of fuel currently flowing into the flowmeter A (100) by analyzing the signal transmitted from the flowmeter A (100). If the determined fuel amount is smaller than a predetermined fuel amount, the control apparatus 180 recognizes that the fuel supply should be increased to generate the sufficient amount of the reformed gas to be stored in the storing container 145.

Therefore, if the determined fuel amount is smaller than the predetermined fuel amount, the control apparatus 180 controls the fuel booster 105 to raise the pressure of the fuel flowing into the reformer 110 until the amount of the fuel flowing into the reformer 110 reaches to the predetermined fuel amount. At this time, the fuel booster 105 may be controlled based on the determined fuel amount.

Thereby, the fuel amount flowing into the reformer 110 is increased such that the required amount [that is, the volume of the storing container 145] of the reformed gas which will be stored in the storing container 145 is generated by the reformer 110.

As described above, if the amount of the fuel flowing into the reformer 110 is increased by the fuel booster 105, the control apparatus 180 opens the valve C (125) and maintains the valve D (130) to be closed at step S310. The reformed gas passing through the opened valve C (125) is compressed to be the predetermined pressure by the compressor 140 and is then supplied to the storing container 145. Therefore, the reformed gas is stored in the storing container 145.

Since the valve B 120 and the valve E (165) are maintained to be opened during the reformed gas is stored in the storing container 145, the reformed gas is supplied to the fuel cell stack 160 through the valve B (120) and the fuel cell stack 160 generates electricity continuously.

At this time, the volume of the storing container 145, as described above, can be determined based on the warm-up time, the time required to operate the emergency load, the time required to perform backup of data of the fuel cell system, etc.

If the valve C (125) is open to store the reformed gas in the storing container 145, the control apparatus 180 controls the flowmeter B (135) and the compressor 140 such that increment of the reformed gas according to increment of the fuel amount flowing into the reformer 110 is stored in the storing container 145.

Therefore, the control apparatus 180 determines the increment of the fuel amount flowing into the reformer 110 using the fuel amount determined by the flowmeter A 100, and controls the compressor 140 such that the reformed gas corresponding to the increment of the fuel amount is stored in the storing container 145 at step S320. At this time, the control apparatus 180 controls the compressor 140 until the amount of the reformed gas determined by the signal from the flowmeter B (135) and flowing into the storing container 145 corresponds to the increment of the fuel amount.

If the reformed gas is stored in the storing container 145, the control apparatus 180 determines the pressure in the storing container 145 using the signal transmitted from the pressure sensor 150, and determines whether the determined pressure reaches the predetermined pressure to determine whether the desired amount of the reformed gas is stored in the storing container 145 at step S330.

If the determined pressure in the storing container 145 is lower than the predetermined pressure, the control apparatus 180 determines that the desired amount of the reformed gas is not stored in the storing container 145. Therefore, the control apparatus 180 returns to the step S300 and continues to store the reformed gas in the storing container 145.

If the pressure in the storing container 145 reaches the predetermined pressure, however, the control apparatus 180 determines that the desired amount of the reformed gas is stored in the storing container 145, closes the valve C (125), and stops the compressor 140 [OFF state] such that the reformed gas does not flow into the storing container 145 any more at step S340.

If the reformed gas is completely stored in the storing container 145, the reformed gas is not further generated to be stored in the storing container 145.

Therefore, the control apparatus 180 reduces the amount of the fuel flowing into the reformer 110 such that the reformer 110 generates the reformed gas sufficient to be supplied to the fuel cell stack 160.

That is, the control apparatus 180 determines the fuel amount flowing into the flowmeter A (100) using the signal transmitted from the flowmeter A (100) and controls the fuel booster 106 to lower the pressure of the fuel supplied into the reformer 110 at step S350 such that the determined fuel amount becomes the same as predetermined fuel amount.

Thereby, the fuel amount flowing into the reformer 110 is reduced by the amount which is additionally generated to be stored in the storing container 145.

As described above, if the desired amount of the reformed gas is not stored in the storing container 145 in the normal operation mode, the control apparatus 180 is configured to supply the reformed gas to the fuel cell stack 160 to generate electricity normally and to store the desired amount of the reformed gas in the storing container 145.

### [Instantaneous operation mode]

If the mode selection signal transmitted from the control apparatus 180 corresponds to the instantaneous operation mode in a state that the reformed gas is stored in the storing container 145, the control apparatus 180 performs instantaneous operation of the fuel cell stack 160 using the reformed gas in the storing container 145.

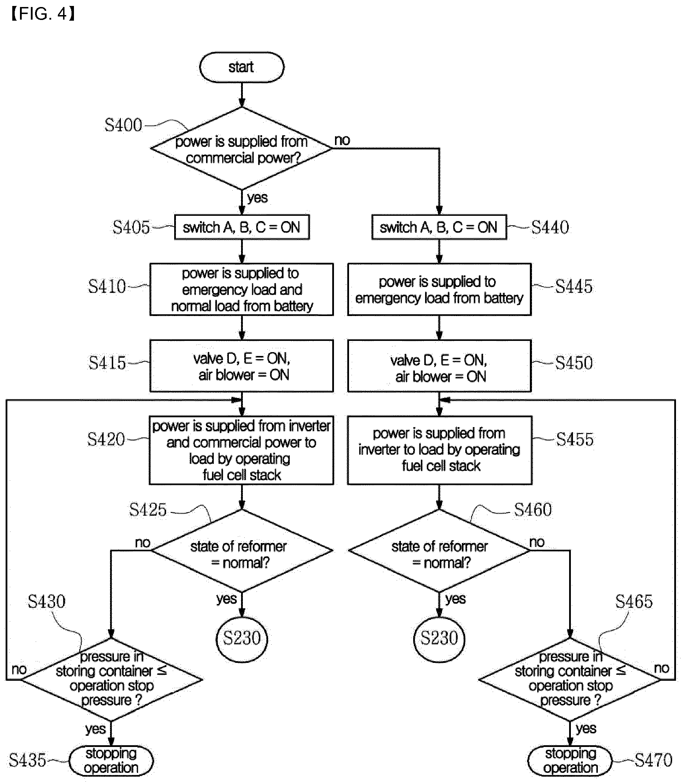

Referring to FIG. 4, the control of the fuel cell system at the instantaneous operation mode will be described.

If it is determined that the operation mode is the instantaneous operation mode, the control apparatus 180 determines whether the power is supplied from the commercial power 163 normally at step S400.

In order to determine whether the power is supplied from the commercial power 163 normally, the control apparatus 180 may use a voltmeter for detecting voltage of the commercial power 163. If the voltage detected by the voltmeter is lower than or equal to predetermined voltage, the control apparatus 180 determines that the power is not supplied from the commercial power 163 normally due to blackout, power failure, etc.

### - When power is supplied from commercial power

If the power is supplied from the commercial power 163 at the step S400, the control apparatus 180 turns on the switch A to switch C (193, 196, and 199) at step S405.

After that, the control apparatus 180 supplies charged voltage of the battery 175 to the fuel cell system to be operated. Thereby, the charged voltage of the battery 175 is supplied to the emergency load 186 and the normal load 189 at step S410.

After that, the control apparatus 180 opens the valve D (130) and drives the air blower 173 such that the reformed gas in the storing container 145 is supplied to the fuel cell stack 160 through the pressure regulator 133 at step S415.

Therefore, the fuel cell stack 160 operates to generate electricity and the battery 175 is charged at step S420. In addition, at least one of the cell power and the power of the commercial power 163 is supplied to the loads 186 and 189 at the step S420.

In such the instantaneous operation mode, the control apparatus 180 controls the reformer 110 and the valves 120 and 115 such that the reformer 110 generates the reformed gas.

In a state that the reformer 110 is controlled to generate the reformed gas, the control apparatus 180 determines whether the fuel flows into the reformer 110 and the reformer 110 generates the reformed gas with complete composition, that is whether the reformer 110 is operated and the warm-up time passed using the signal transmitted from the flowmeter A (100) and the signal transmitted from the temperature detector at step S425.

If it is determined that the fuel is supplied to the reformer 110 and the reformer 110 generates the reformed gas with complete composition at the step S425, the control apparatus 180 closes the valve D (130) and proceeds to the step S230 in FIG. 2 such that the fuel cell system is operated at the normal operation mode.

If the fuel does not flow to the flowmeter A (100) or the reformer 110 does not generate the reformed gas with complete composition, the control apparatus 180 operates the fuel cell system using the reformed gas in the storing container 145.

If the generation of electricity is performed by using the stored gas stored in the storing container 145, the control apparatus 180 determines whether the pressure in the storing container 145 detected by the pressure sensor 150 is lower than or equal to a predetermined pressure (operation stop pressure) at step S430. If it is determined that the reformed gas stored in the storing container 145 is consumed completely, the control apparatus 180 stops the operation of the fuel cell system at step S435 to cause the fuel cell system to operate until the stored gas in the storing container 145 is totally consumed.

### - When power is not supplied from commercial power

If the power is not supplied from the commercial power 163 at the step S400, the control apparatus 180 turns on the switch A (193) and the switch B (196) and turns off the switch C (199) at step S440.

Therefore, the charged voltage of the battery 175 is supplied to the fuel cell system to be operated and to the emergency load 186 according to control of the control apparatus 180 at step S445.

After that, the control apparatus 180 opens the valve D (130) and drives the air blower 173 such that the fuel cell stack 160 generates electricity using the reformed gas in the storing container 145 at step S450.

Therefore, the fuel cell stack 160 generates electricity using the stored reformed gas, and the control apparatus 180 controls charging of the battery 175 and supplies the cell power to the load 186 through the turned-on switches 193 and 196 at step S455.

As described above, the control apparatus 180 controls the reformer 110 and the valves 120 and 115 such that the reformer 110 generates the reformed gas in the instantaneous operation mode.

Therefore, as described above, the control apparatus 180 determines whether warm-up of the reformer 110 is completed using the signal transmitted from the flowmeter A (100) and the signal transmitted from the temperature detector, closes the valve D (130) if the warm-up of the reformer 110 is completed, and proceeds to the step S230 in FIG. 2 such that the fuel cell system is operated at the normal operation mode at steps S460, S465, and S470.

### [Stand-alone mode]

In the stand-alone mode, the fuel cell system is decoupled from the commercial power 163 or the commercial power 163 does not exist due to blackout, power failure, decoupling of plugs, etc.

The control apparatus 180 determines using the mode selection signal whether the operation mode is the stand-alone mode and controls the fuel cell system. Whether the commercial power 163 exists can be determined using the voltmeter.

The stand-alone mode is classified into first case in which the commercial power 163 is decoupled during normal operation of the fuel cell system and second case in which the fuel cell system is operated in a state that the commercial power 163 is decoupled.

The first is further classified into a case in which the fuel input to the reformer 110 is cut off and a case in which the fuel is supplied to the reformer 110.

In the case when the fuel is cut off, the control apparatus 180 operates the fuel cell system using the reformed gas stored in the storing container 145 to supply the power to the loads 186 and 189. In addition, the control apparatus 180 stops the operation of the fuel cell system is the reformed gas is totally consumed.

In the case when the fuel is supplied, on the contrary, the fuel cell system is continuously operated.

The second case is classified into a case in which the fuel input to the reformer 110 is cut off and a case in which the fuel is supplied to the reformer 110.

In the case when the fuel is cut off, the control apparatus 180 operates the fuel cell system using the reformed gas stored in the storing container 145 to supply the power to the loads 186 and 189. In addition, the control apparatus 180 stops the operation of the fuel cell system is the reformed gas is totally consumed.

In the case when the fuel is not cut off, the control apparatus 180 operates the fuel cell system using the reformed gas stored in the storing container 145 to supply the power to the loads 186 and 189. Simultaneously, the control apparatus 180 drives the reformer 110. When the reformer 110 can generate the reformed gas with complete composition, the control apparatus 180 changes the reformed gas supplied to the fuel cell stack 160 from the reformed gas in the storing container 145 into the reformed gas generated by the reformer 110 such that the power is continuously supplied to the loads 186 and 189.

### [High-speed operation mode]

In the alternative embodiment, different from the exemplary embodiment, fuel cell system can be further operated at a high-speed operation mode. The high-speed operation mode is used when the power consumption by the emergency load 186 and the normal load 189 is larger than a normal range such that the fuel cell system should generate more power than the power required in the normal operation mode.

If the operation mode of the fuel cell system is the high-speed operation mode, the control apparatus 180 opens the valve B (120) and the valve D (130) such that the reformed gas supplied from the reformer 110 and the reformed gas supplied from the storing container 145 are supplied to the fuel cell stack 160 to generate the power.

In the high-speed operation mode, opening degree of the valve D (130) may be determined considering the amount of the reformed gas (i.e., additional reformed gas) which will be additionally supplied to the fuel cell stack 160.

For example, if the amount of the reformed gas which will be additionally supplied to the fuel cell stack 160 is 70ℓ-100ℓ, opening degree of the valve D (130) may be determined as 70%-100% of full opening.

In addition, if the amount of the reformed gas which will be additionally supplied to the fuel cell stack 160 is 40ℓ-70ℓ opening degree of the valve D (130) may be determined as 40%-70% of full opening, and if the amount of the reformed gas which will be additionally supplied to the fuel cell stack 160 is 0ℓ-40f opening degree of the valve D (130) may be determined as 0-40% of full opening.

Information on the amount of the reformed gas which will be additionally supplied is transmitted to the control apparatus 180, and the control apparatus can determine the opening degree of the valve 130 based on the on the amount of the reformed gas which will be additionally supplied.

In addition, according to the exemplary embodiment of the present invention, the control apparatus 180 can adjust the amount of the reformed gas supplied to the fuel cell stack 160 from the storing container 145 considering amount of the reformed gas supplied after warm-up of the reformer 110.

At initial warm-up state from start of the warm-up to a predetermined state, the control apparatus 180 may increase the amount of the reformed gas supplied from the reformer 110 to the fuel cell stack 160. After the warm-up, the amount of the reformed gas supplied from the reformer 110 to the fuel cell stack 160 can be detected by a detector (not shown) mounted at a downstream of the valve B (120).

Therefore, information on the amount of the reformed gas detected by the detector can be transmitted to the control apparatus 180, and the control apparatus 180 determines the amount of the reformed gas supplied from the storing container 145 to the fuel cell stack 160 considering the inputted information on the amount of the reformed gas.

Since the amount of the reformed gas supplied from the reformer 110 to the fuel cell stack 160 is relatively small at the initial warm-up state, the amount of the reformed gas supplied from the storing container 145 to the fuel cell stack 160 may be relatively large based on the information on the amount of the reformed gas. Since the amount of the reformed gas supplied from the reformer 110 to the fuel cell stack 160 increases after the initial warm-up state, the amount of the reformed gas supplied from the reformer 110 to the fuel cell stack 160 also increases. Therefore, the amount of the reformed gas supplied from the storing container 145 to the fuel cell stack 160 may be reduced.

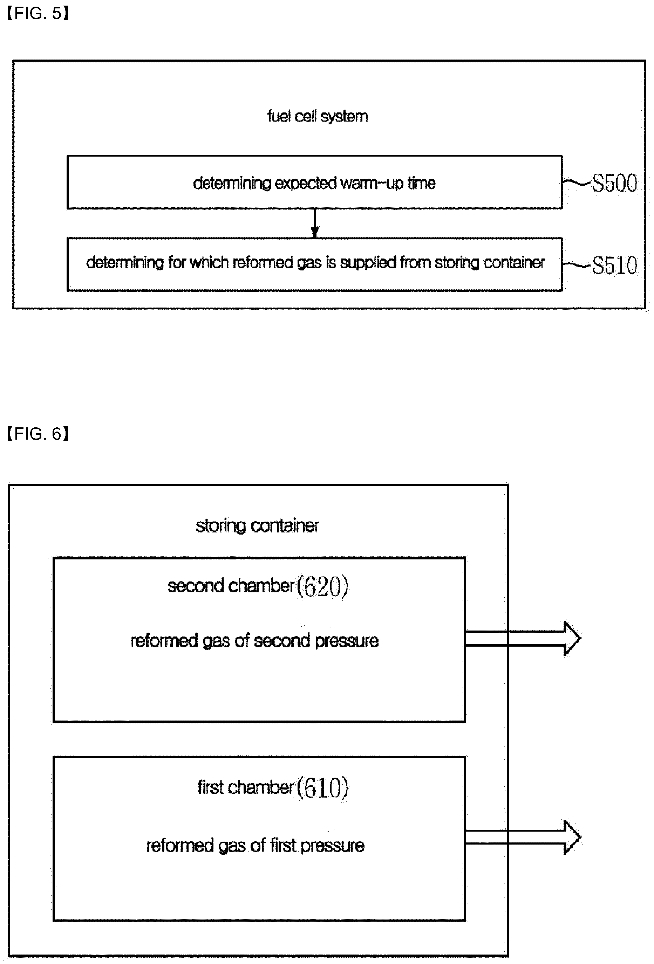

A method of supplying the reformed gas from the storing container 145 to the fuel cell stack 160 considering the warm-up time (i.e., warm-up state) of the reformer 110 and the amount of the fuel supplied to the reformer 110 is illustrated in FIG. 5.

Referring to FIG. 5, the warm-up time of the reformer 110 may be changed according to ambient temperature. For example, in order to raise the temperature in the reformer 110 to 80° (to warm up the reformer 110), the warm-up time of the reformer 110 in winter is longer than that in summer.

Therefore, the control apparatus 180 in the fuel cell system according to the exemplary embodiment of the present invention can determine expected warm-up time which is time to complete warm-up of the reformer 110 using the ambient temperature detected by a temperature detector at step S500.

The higher the ambient temperature is the shorter the expected warm-up time is. On the contrary, the lower the ambient temperature is the longer the expected warm-up time is.

Therefore, the control apparatus 180 determines the expected warm-up time according to the ambient temperature using pre-stored data, and determines time for which the reformed gas is supplied from the storing container 145 to the fuel cell stack 160 according to the determined expected warm-up time at step S510.

Opening degree of the valve D (130) is set to 100% (full opening) during the expected warm-up time such that the reformed gas is totally supplied from the storing container 145 to the fuel cell stack 160.

After the expected warm-up time, the control apparatus 180 set the opening degree of the valve D (130) to be smaller than 100% considering the amount of the reformed gas supplied from the reformer 110 to the fuel cell stack 160 such that the reformed gas is supplied from the storing container 145 to the fuel cell stack 160.

After that, if the operation mode of the fuel cell system is not the high-speed operation mode and the amount of the reformed gas supplied from the reformer 110 to the fuel cell stack 160 is sufficient to operate the fuel cell stack 160, the valve D (130) is closed and the reformed gas from the reformer 110 is stored in the storing container 145 again.

Furthermore, the control apparatus 180 may adjust the amount of the reformed gas supplied from the storing container 145 to the fuel cell stack 160 considering the amount of the inflow fuel detected by the flowmeter A (100).

If the operation mode of the fuel cell system is the normal operation mode, the amount of the reformed gas supplied from the reformer 110 to the fuel cell stack 160 is not sufficient.

If the amount of the reformed gas supplied from the reformer 110 to the fuel cell stack 160 is not sufficient, the control apparatus 180 can control to supply the reformed gas stored in the storing container 145 to the fuel cell stack 160 in the normal operation mode.

In this case, the control apparatus 180 determines whether the amount of the reformed gas supplied from the reformer 110 to the fuel cell stack 160 is sufficient using the amount of the inflow fuel detected by the flowmeter A (100) and the predetermined amount.

It is illustrated in FIG. 6 that the storing container for storing the reformed gas is divided into a plurality of chambers, each storing the reformed gas of different pressure.

Referring to FIG. 6, an internal chamber of the storing container is divided into a plurality of chamber, and the reformed gas of different pressure is stored in each chamber.

For example, the reformed gas of first pressure is stored in the first chamber 610 of the storing container, and the reformed gas of second pressure is stored in the second chamber 620 of the storing container. The first pressure may be higher than the second pressure.

The reformed gas of the first pressure stored in the first chamber 610 may be supplied from the storing container to the fuel cell stack 160 during the initial warm-up, and the reformed gas of the second pressure stored in the second chamber 620 may be supplied from the storing container to the fuel cell stack 160 when the reformed gas is supplied from the reformer 110 to the fuel cell stack 160 after the initial warm-up.

If a lot of the reformed gas should be supplied from the storing container to the fuel cell stack 160 during the initial warm-up, the reformed gas of the first pressure is changed into the reformed gas of desired pressure for the fuel cell stack 160 and the reformed gas of the desired pressure is supplied to the fuel cell stack 160. Therefore, relatively much reformed gas is supplied to the fuel cell stack 160.

If relatively less reformed gas should be supplied from the storing container to the fuel cell stack 160 in the middle of the warm-up and the latter half of the warm-up, the reformed gas of the second pressure is changed into the reformed gas of the desired pressure for the fuel cell stack 160 and the reformed gas of the desired pressure is supplied to the fuel cell stack 160. Therefore, relatively much reformed gas is supplied to the fuel cell stack 160.

According to another exemplary embodiment of the present invention, the reformed gas of the second pressure may be supplied from the storing container to the fuel cell stack in the initial warm-up. If the pressure in the second chamber 620 is lowered than the second pressure as the reformed gas of the second pressure is supplied, the reformed gas of the first pressure in the first chamber 610 may flow to the second chamber 620 and pressure of the reformed gas in the second chamber 620 may be maintained to the second pressure.

At this time, the control apparatus 180 may determine a warm-up state (i.e., the initial warm-up, the middle of warm-up, and the latter half of warm-up) using temperature change in the reformer or a time passing after the operation of the fuel cell system.

According to the exemplary embodiment of the present invention, the first pressure and the second pressure may be varied according to the operation of the fuel cell system and the amount of the fuel.

For example, if the amount of the fuel supplied to the storing container is larger than a threshold, the first pressure may be set to a relatively higher value. If the amount of the fuel supplied to the storing container is large, the first pressure is raised to store much reformed gas in the storing container.

In another example, if the amount of the fuel supplied to the storing container is less than or equal to the threshold, the first pressure may be set to a relatively lower value. If the amount of the fuel supplied to the storing container is little, the first pressure is lowered to the relatively lower value and less reformed gas is stored in the storing container in order to avoid unnecessary pressure change for supplying the reformed gas to the fuel cell stack.

For ease of convenience, it is illustrated in FIG. 6 that the storing container is divided into the plurality of chambers 610 and 620 and the reformed gas of different pressure is stored in each chamber 610 and 620. However, a plurality of storing containers may be provided and the reformed gas of different pressure may be stored in each storing container.

If the storing container is divided into the plurality of chambers, an electric valve which is controlled by the control apparatus may be mounted at each inlet of each chamber and/or at each outlet of each chamber. In addition, a compressor and a pressure regulator may be additionally provided as occasion demand. Therefore, the control apparatus controls the corresponding electric valves according to the operation of the reformer such that the reformed gas flows into the corresponding chamber and flows out from the corresponding chamber at desired timings.

If the gas of different pressure flows between the chambers, an electric valve which is controlled by the control apparatus may be mounted between the neighboring chambers. Therefore, the control apparatus causes the gas to flow between the neighboring chambers by controlling the electric valve according to the pressure in each chamber detected by a pressure detector.

The method of driving the fuel cell system may be embodied as application, or embodied as program instructions which is performed by a number of computer constituent elements and recorded in a computer readable recording medium. The computer readable recording medium includes program instructions, data files, data structures themselves or combinations thereof.

The program instructions recorded in the computer readable recording medium may be specially programmed for the present invention or be program instructions well known to and usable by a person of skill in computer software field.

Examples of the computer readable recording medium include magnetic media such as hard disks, floppy disks, and magnetic tapes, optical recording media such as CD-ROMs and DVDs, magneto-optical media such as floptical disks, and a hardware device which stores and executes program instructions, such as, ROMs, RAMs, flash memories.

Examples of the program instructions include machine language codes compiled by a compiler and high-level language codes executable by a computer using an interpreter. The hardware device can be embodied as at least one software module for executing the present invention, and vice versa.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A method of driving a fuel cell system, comprising:
discharging a reformed gas with incomplete composition generated by a reformer (110) by opening a first valve (115) when a reforming reaction starts in the reformer (110),
delivering a reformed gas with complete composition generated by the reformer (110) to a fuel cell stack (160) by closing the first valve (115) and opening a second valve (120) when the reformed gas with complete composition is discharged from the reformer (110) after the reformed gas with incomplete composition is discharged, and
storing the reformed gas with complete composition generated by the reformer (110) in a storing container (145) by opening a third valve (125),
determining an internal pressure of the storing container (145) using a signal transmitted from a pressure sensor (150),
comparing the determined internal pressure with a predetermined pressure,
closing the third valve (125) when the determined internal pressure reaches the predetermined pressure, and
reducing amount of the fuel flowing into the reformer (110) by controlling operation of a fuel booster (105),
opening a fourth valve (130) such that the reformed gas with complete composition stored in the storing container (145) flows into the fuel cell stack (160) when an operation mode is an instantaneous operation mode,
determining an expected warm-up time which is time to complete warm-up of the reformer (110) using the ambient temperature detected by a temperature detector,
opening degree of the fourth valve (130) is set to full opening during the expected warm-up time,
after the expected warm-up time, setting the opening degree of the fourth valve (130) to be smaller considering the amount of the reformed gas supplied from the reformer (110) to the fuel cell stack (160), and
wherein an internal chamber of the storing container (145) is divided into a plurality of chamber, and the reformed gas of different pressure, that are a first pressure and a second pressure, is stored in each chamber,
the reformed gas of the first pressure which is higher than the second pressure stored in a first chamber (610) is supplied from the storing container (145) to the fuel cell stack (160) during the initial warm-up, and
the reformed gas of the second pressure stored in a second chamber (620) is supplied from the storing container (145) to the fuel cell stack (160) after the initial warm-up.

2. The method of claim 1, wherein inflow amount of the fuel is determined according to a compression pressure of the reformed gas with complete composition stored in the storing container (145) and a capacity of the storing container (145).

3. The method of claim 1, further comprising opening the second valve (120) and the fourth valve (130) such that the reformed gas supplied from the reformer (110) and the reformed gas supplied from the storing container (145) flow into the fuel cell stack (160) when an operation mode is a high-speed operation mode.

4. A fuel cell system, comprising:
a reformer (100) which reforms fuel into a reformed gas in desired state and discharges the reformed gas, the fuel flowing into the reformer (110) through a first inlet,
a first valve (115) positioned between an outlet of the reformer (110) and a second inlet,
a second valve (120) connected to the outlet of the reformer (110),
a fuel cell stack (160) connected to the second valve (120) and producing electricity using the reformed gas flowing in the fuel cell stack (160) through the second valve (120),
a third valve (125) connected to the outlet of the reformer (110),
a storing container (145) connected to the third valve (125),
a fourth valve (130) positioned between the storing container (145) and an inlet of the fuel cell stack (160),
a fifth valve (135) positioned between an outlet of the fuel cell stack (160) and the second inlet of the reformer (110), and
a control apparatus (180) connected to the first to fifth valves (115, 120, 125, 130, 135) and controlling opening or closing status of the first valve to fifth valves (115, 120, 125, 130, 135),
wherein the control apparatus (180) is configured to:
open the first valve (115) to discharge a reformed gas with incomplete composition toward the reformer when a reforming reaction starts in the reformer (110),
open the second valve (120) and the fifth valve (135) such that a reformed gas with complete composition flows into the fuel cell stack (160) to operate the fuel cell stack (160) when the reformed gas with complete composition is generated in the reformer (100),
open the third valve (125) to store the reformed gas with complete composition in the storing container (145), and
open the fourth valve (130) such that the reformed gas with complete composition stored in the storing container (145) flows into the fuel cell stack (160) when a mode selection signal corresponds to an instantaneous operation mode.

5. The fuel cell system of claim 4, further comprising a temperature detector connected to the control apparatus (180) and detecting an inside temperature of the reformer (110),
wherein the control apparatus (180) determines the inside temperature of the reformer (110) using a detection signal output from the temperature detector, opens the first valve (115) when the determined inside temperature reaches a first predetermined temperature, and closes the first valve (115) and opens the second valve (120) when the determined inside temperature is higher than or equal to a second predetermined temperature.

6. The fuel cell system of claim 5, further comprising a pressure sensor (150) connected to the control apparatus (180) and detecting an internal pressure of the storing container (145),
wherein the control apparatus (180) determines the internal pressure of the storing container (145) using a signal transmitted from the pressure sensor (150) and opens the third valve (125) when the determined internal pressure is lower than a predetermined pressure.

7. The fuel cell system of claim 6, further comprising:
a first flowmeter (100) connected to the control apparatus (180) and detecting amount of the fuel flowing into the reformer (100), and
a fuel booster (105) connected to the control apparatus (180) and adjusting a pressure of the fuel flowing into the reformer (100) after passing through the first flowmeter (100),
wherein the control apparatus (180) controls the fuel booster (105) to increase the amount of the fuel flowing into the reformer (110) when the internal pressure is lower than the predetermined pressure and the amount of the fuel determined by the first flowmeter (100) does not reach a predetermined amount, and
wherein the predetermined amount is determined according to a compression pressure of the reformed gas with complete composition stored in the storing container and a capacity of the storing container (145).

8. The fuel cell system of claim 4, wherein the control apparatus (180) opens the second valve (120) and the fourth valve (130) such that the reformed gas supplied from the reformer (100) and the reformed gas supplied from the storing container (145) flow into the fuel cell stack (160) when the mode selection signal corresponds to a high-speed operation mode.

## Patentansprüche

1. Verfahren zum Antreiben eines Brennstoffzellensystems, umfassend:
Ablassen eines reformierten Gases mit unvollständiger Zusammensetzung, das durch einen Reformer (110) erzeugt wurde, durch Öffnen eines ersten Ventils (115), wenn eine Reformierungsreaktion in dem Reformer (110) beginnt,
Zuführen eines reformierten Gases mit vollständiger Zusammensetzung, das durch den Reformer (110) erzeugt wurde, zu einem Brennstoffzellenstapel (160) durch Schließen des ersten Ventils (115) und Öffnen eines zweiten Ventils (120), wenn das reformierte Gas mit vollständiger Zusammensetzung aus dem Reformer (110) abgelassen wird, nachdem das reformierte Gas mit unvollständiger Zusammensetzung abgelassen wurde, und
Speichern des durch den Reformer (110) erzeugten reformierten Gases mit vollständiger Zusammensetzung in einem Speicherbehälter (145) durch Öffnen eines dritten Ventils (125),
Bestimmen eines Innendrucks des Speicherbehälters (145) unter Verwendung eines von einem Drucksensor (150) gesendeten Signals,
Vergleichen des bestimmten Innendrucks mit einem vorgegebenen Druck,
Schließen des dritten Ventils (125), wenn der bestimmte Innendruck den vorgegebenen Druck erreicht, und
Reduzieren der in den Reformer (110) strömenden Brennstoffmenge durch Steuern des Betriebes eines Brennstoffboosters (105),
Öffnen eines vierten Ventils (130), dergestalt, dass das in dem Speicherbehälter (145) gespeicherte reformierte Gas mit vollständiger Zusammensetzung in den Brennstoffzellenstapel (160) strömt, wenn ein Betriebsmodus ein augenblicklicher Betriebsmodus ist,
Bestimmen einer erwarteten Aufwärmzeit, die eine Zeit bis zum vollständigen Aufwärmen des Reformers (110) ist, unter Verwendung der durch einen Temperaturdetektor detektierten Umgebungstemperatur,
wobei der Öffnungsgrad des vierten Ventils (130) während der erwarteten Aufwärmzeit auf volle Öffnung eingestellt ist, nach der erwarteten Aufwärmzeit, Einstellen des Öffnungsgrades des vierten Ventils (130), unter Berücksichtigung der Menge des reformierten Gases, das von dem Reformer (110) in den Brennstoffzellenstapel (160) geleitet wird, auf kleiner, und
wobei eine innere Kammer des Speicherbehälters (145) in mehrere Kammern unterteilt ist und das reformierte Gas mit unterschiedlichem Druck, das heißt einem ersten Druck und einem zweiten Druck, in jeder Kammer gespeichert wird,
wobei das reformierte Gas mit dem ersten Druck, der höher als der zweite Druck ist, das in einer ersten Kammer (610) gespeichert ist, während der anfänglichen Aufwärmphase aus dem Speicherbehälter (145) zu dem Brennstoffzellenstapel (160) geführt wird, und
wobei das reformierte Gas mit dem zweiten Druck, das in einer zweiten Kammer (620) gespeichert ist, nach dem anfänglichen Aufwärmen aus dem Speicherbehälter (145) zu dem Brennstoffzellenstapel (160) geführt wird.

2. Verfahren nach Anspruch 1, wobei die Einströmmenge des Brennstoffs gemäß einem Kompressionsdruck des reformierten Gases mit vollständiger Zusammensetzung, das in dem Speicherbehälter (145) gespeichert ist, und einem Fassungsvermögen des Speicherbehälters (145) bestimmt wird.

3. Verfahren nach Anspruch 1, des Weiteren umfassend das Öffnen des zweiten Ventils (120) und des vierten Ventils (130), dergestalt, dass das von dem Reformer (110) zugeführte reformierte Gas und das von dem Speicherbehälter (145) zugeführte reformierte Gas in den Brennstoffzellenstapel (160) strömen, wenn ein Betriebsmodus ein Hochgeschwindigkeitsbetriebsmodus ist.

4. Brennstoffzellensystem, umfassend:
einen Reformer (100), der Brennstoff in ein reformiertes Gas in einem gewünschten Zustand reformiert und das reformierte Gas ablässt, wobei der Brennstoff durch einen ersten Einlass in den Reformer (110) strömt,
ein erstes Ventil (115), das zwischen einem Auslass des Reformers (110) und einem zweiten Einlass angeordnet ist,
ein zweites Ventil (120), das mit dem Auslass des Reformers (110) verbunden ist,
einen Brennstoffzellenstapel (160), der mit dem zweiten Ventil (120) verbunden ist und Elektrizität unter Verwendung des reformierten Gases erzeugt, das durch das zweite Ventil (120) in den Brennstoffzellenstapel (160) strömt,
ein drittes Ventil (125), das mit dem Auslass des Reformers (110) verbunden ist,
einen Speicherbehälter (145), der mit dem dritten Ventil (125) verbunden ist,
ein viertes Ventil (130), das zwischen dem Speicherbehälter (145) und einem Einlass des Brennstoffzellenstapels (160) angeordnet ist,
ein fünftes Ventil (135), das zwischen einem Auslass des Brennstoffzellenstapels (160) und dem zweiten Einlass des Reformers (110) angeordnet ist, und
eine Steuervorrichtung (180), die mit den ersten bis fünften Ventilen (115, 120, 125, 130, 135) verbunden ist und den Öffnungs- oder Schließzustand der ersten bis fünften Ventile (115, 120, 125, 130, 135) steuert,
wobei die Steuervorrichtung (180) eingerichtet ist zum:
Öffnen des ersten Ventils (115), um ein reformiertes Gas mit unvollständiger Zusammensetzung in Richtung des Reformers abzulassen, wenn in dem Reformer (110) eine Reformierungsreaktion beginnt,
Öffnen des zweiten Ventils (120) und des fünften Ventils (135), dergestalt, dass ein reformiertes Gas mit vollständiger Zusammensetzung in den Brennstoffzellenstapel (160) strömt, um den Brennstoffzellenstapel (160) zu betreiben, wenn das reformierte Gas mit vollständiger Zusammensetzung in dem Reformer (100) erzeugt wird,
Öffnen des dritten Ventils (125), um das reformierte Gas mit vollständiger Zusammensetzung in dem Speicherbehälter (145) zu speichern, und
Öffnen des vierten Ventils (130), dergestalt, dass das in dem Speicherbehälter (145) gespeicherte reformierte Gas mit vollständiger Zusammensetzung in den Brennstoffzellenstapel (160) strömt, wenn ein Modusauswahlsignal einem augenblicklichen Betriebsmodus entspricht.

5. Brennstoffzellensystem nach Anspruch 4, des Weiteren umfassend einen Temperaturdetektor, der mit der Steuervorrichtung (180) verbunden ist und eine Innentemperatur des Reformers (110) detektiert,
wobei die Steuervorrichtung (180) die Innentemperatur des Reformers (110) unter Verwendung eines von dem Temperaturdetektor ausgegebenen Detektionssignals bestimmt, das erste Ventil (115) öffnet, wenn die bestimmte Innentemperatur eine erste vorgegebene Temperatur erreicht, und das erste Ventil (115) schließt und das zweite Ventil (120) öffnet, wenn die bestimmte Innentemperatur mindestens so hoch ist wie eine zweite vorgegebene Temperatur.

6. Brennstoffzellensystem nach Anspruch 5, des Weiteren umfassend einen Drucksensor (150), der mit der Steuervorrichtung (180) verbunden ist und einen Innendruck des Speicherbehälters (145) detektiert,
wobei die Steuervorrichtung (180) den Innendruck des Speicherbehälters (145) unter Verwendung eines von dem Drucksensor (150) gesendeten Signals bestimmt und das dritte Ventil (125) öffnet, wenn der bestimmte Innendruck niedriger als ein vorgegebener Druck ist.

7. Brennstoffzellensystem nach Anspruch 6, des Weiteren umfassend:
einen ersten Durchflussmesser (100), der mit der Steuervorrichtung (180) verbunden ist und die Menge des in den Reformer (110) strömenden Brennstoffs detektiert, und
einen Brennstoffbooster (105), der mit der Steuervorrichtung (180) verbunden ist und einen Druck des in den Reformer (100) strömenden Brennstoffs nach dem Hindurchströmen durch den ersten Strömungsmesser (100) einstellt,
wobei die Steuervorrichtung (180) den Brennstoffbooster (105) veranlasst, die Menge des in den Reformer (110) strömenden Brennstoffs zu erhöhen, wenn der Innendruck niedriger als der vorgegebene Druck ist und die durch den ersten Strömungsmesser (100) bestimmte Brennstoffmenge eine vorgegebene Menge nicht erreicht, und
wobei die vorgegebene Menge gemäß einem Kompressionsdruck des reformierten Gases mit vollständiger Zusammensetzung, das in dem Speicherbehälter gespeichert ist, und einem Fassungsvermögen des Speicherbehälters (145) bestimmt wird.

8. Brennstoffzellensystem nach Anspruch 4, wobei die Steuervorrichtung (180) das zweite Ventil (120) und das vierte Ventil (130) öffnet, dergestalt, dass das von dem Reformer (100) zugeführte reformierte Gas und das von dem Speicherbehälter (145) zugeführte reformierte Gas in den Brennstoffzellenstapel (160) strömen, wenn das Modusauswahlsignal einem Hochgeschwindigkeitsbetriebsmodus entspricht.

## Revendications

1. Procédé de pilotage d'un système de pile à combustible, comprenant les étapes suivantes :
évacuer un gaz reformé de composition incomplète, engendré par un reformeur (110), en ouvrant une première soupape (115) lorsqu'une réaction de reformage démarre dans le reformeur (110),
distribuer un gaz reformé de composition complète, engendré par le reformeur (110), à un empilement de piles à combustible (160) en fermant la première soupape (115) et en ouvrant une deuxième soupape (120), lorsque le gaz reformé de composition complète est évacué par le reformeur (110) après que le gaz reformé de composition incomplète a été évacué, et
stocker le gaz reformé de composition complète, engendré par le reformeur (110), dans un récipient de stockage (145) en ouvrant une troisième soupape (125),
déterminer une pression interne du récipient de stockage (145) à l'aide d'un signal émis par un capteur de pression (150),
comparer la pression interne déterminée à une pression prédéterminée,
fermer la troisième soupape (125) lorsque la pression interne déterminée atteint la pression prédéterminée, et réduire la quantité du combustible s'écoulant dans le reformeur (110) en régissant le fonctionnement d'un dispositif de suralimentation en combustible (105),
ouvrir une quatrième soupape (130) de manière que le gaz reformé de composition complète stocké dans le récipient de stockage (145) s'écoule dans l'empilement de piles à combustible (160) lorsqu'un mode de fonctionnement est un mode de fonctionnement instantané,
déterminer un temps attendu de mise en température qui est le temps nécessaire pour achever la mise en température du reformeur (110), à l'aide de la température ambiante détectée par un détecteur de température,
le degré d'ouverture de la quatrième soupape (130) est réglé sur une ouverture complète pendant le temps attendu de mise en température,
après le temps attendu de mise en température, régler le degré d'ouverture de la quatrième soupape (130) de façon à le réduire compte tenu de la quantité de gaz reformé fourni par le reformeur (110) à l'empilement de piles à combustible (160), et
dans lequel une chambre interne du récipient de stockage (145) est divisée en une pluralité de chambres, et le gaz reformé à différentes pressions, qui sont une première pression et une seconde pression, est stocké dans chaque chambre,
le gaz reformé à la première pression, qui est supérieure à la seconde pression, stocké dans une première chambre (610) est fourni par le récipient de stockage (145) à l'empilement de piles à combustible (160) pendant la mise en température initiale, et
le gaz reformé à la seconde pression, stocké dans une seconde chambre (620) est fourni par le récipient de stockage (145) à l'empilement de piles à combustible (160) après la mise en température initiale.

2. Procédé selon la revendication 1, dans lequel la quantité d'apport de combustible est déterminée en fonction d'une pression de compression du gaz reformé de composition complète, stocké dans le récipient de stockage (145) et d'une capacité du récipient de stockage (145).

3. Procédé selon la revendication 1, comprenant en outre l'ouverture de la deuxième soupape (120) et de la quatrième soupape (130), de manière que le gaz reformé fourni par le reformeur (110) et le gaz reformé fourni par le récipient de stockage (145) s'écoulent dans l'empilement de piles à combustible (160) lorsqu'un mode de fonctionnement est un mode de fonctionnement à grande vitesse.

4. Système de pile à combustible comprenant :
un reformeur (100) qui reforme du combustible en un gaz reformé dans un état souhaité, et évacue le gaz reformé, le combustible s'écoulant dans le reformeur (110) à travers une première entrée,
une première soupape (115) positionnée entre une sortie du reformeur (110) et une seconde entrée,
une deuxième soupape (120) reliée à la sortie du reformeur (110),
un empilement de piles à combustible (160) relié à la deuxième soupape (120) et produisant de l'électricité à l'aide du gaz reformé s'écoulant dans l'empilement de piles à combustible (160) par l'intermédiaire de la deuxième soupape (120),
une troisième soupape (125) reliée à la sortie du reformeur (110),
un récipient de stockage (145) relié à la troisième soupape (125),
une quatrième soupape (130) positionnée entre le récipient de stockage (145) et une entrée de l'empilement de piles à combustible (160),
une cinquième soupape (135) positionnée entre une sortie de l'empilement de piles à combustible (160) et la seconde entrée du reformeur (110), et
un appareil de commande (180) relié aux première à cinquième soupapes (115, 120, 125, 130, 135) et commandant l'état d'ouverture ou de fermeture des première à cinquième soupapes (115, 120, 125, 130, 135),
dans lequel l'appareil de commande (180) est configuré pour :
ouvrir la première soupape (115) pour évacuer un gaz reformé de composition incomplète vers le reformeur lorsqu'une réaction de reformage démarre dans le reformeur (110),
ouvrir la deuxième soupape (120) et la cinquième soupape (135) de manière qu'un gaz reformé de composition complète s'écoule dans l'empilement de piles à combustible (160) pour faire fonctionner l'empilement de piles à combustible (160) lorsque le gaz reformé de composition complète est engendré dans le reformeur (100), ouvrir la troisième soupape (125) pour stocker le gaz reformé de composition complète dans le récipient de stockage (145), et
ouvrir la quatrième soupape (130) de manière que le gaz reformé de composition complète stocké dans le récipient de stockage (145) s'écoule dans l'empilement de piles à combustible (160) lorsqu'un signal de sélection de mode correspond à un mode de fonctionnement instantané.

5. Système de pile à combustible selon la revendication 4, comprenant en outre un détecteur de température connecté à l'appareil de commande (180) et détectant une température intérieure du reformeur (110),
dans lequel l'appareil de commande (180) détermine la température intérieure du reformeur (110) à l'aide d'un signal de détection délivré par le détecteur de température, ouvre la première soupape (115) lorsque la température intérieure déterminée atteint une première température prédéterminée, et ferme la première soupape (115) et ouvre la deuxième soupape (120) lorsque la température intérieure déterminée est supérieure ou égale à une seconde température prédéterminée.

6. Système de pile à combustible selon la revendication 5, comprenant en outre un capteur de pression (150) connecté à l'appareil de commande (180) et détectant une pression interne du récipient de stockage (145),
dans lequel l'appareil de commande (180) détermine la pression interne du récipient de stockage (145) à l'aide d'un signal émis par le capteur de pression (150) et ouvre la troisième soupape (125) lorsque la pression interne déterminée est inférieure à une pression prédéterminée.

7. Système de pile à combustible selon la revendication 6, comprenant en outre :
un premier débitmètre (100) connecté à l'appareil de commande (180) et détectant la quantité de combustible s'écoulant dans le reformeur **(110),** et
un dispositif de suralimentation en combustible (105) connecté à l'appareil de commande (180) et ajustant une pression du combustible s'écoulant dans le reformeur **(110)** après être passé à travers le premier débitmètre (100), dans lequel l'appareil de commande (180) commande le dispositif de suralimentation en combustible (105) pour accroître la quantité de combustible s'écoulant dans le reformeur (110), lorsque la pression interne est inférieure à la pression prédéterminée et que la quantité de combustible, déterminée par le premier débitmètre (100) n'atteint pas une quantité prédéterminée, et
dans lequel la quantité prédéterminée est déterminée en fonction d'une pression de compression du gaz reformé de composition complète, stocké dans le récipient de stockage et d'une capacité du récipient de stockage (145).

8. Système de pile à combustible selon la revendication 4, dans lequel l'appareil de commande (180) ouvre la deuxième soupape (120) et la quatrième soupape (130), de manière que le gaz reformé fourni par le reformeur (100) et le gaz reformé fourni par le récipient de stockage (145) s'écoulent dans l'empilement de piles à combustible (160) lorsque le signal de sélection de mode correspond à un mode de fonctionnement à grande vitesse.
